# EUROPÄISCHE PATENTSCHRIFT

(11) **EP 3 730 822 B1**
(45) Veröffentlichungstag und Bekanntmachung des Hinweises auf die Patenterteilung: **12.07.2023**
(21) Anmeldenummer: 19465530.4
(22) Anmeldetag: 23.04.2019
(51) Int. Cl.: F16K 5/06, F16K 11/087, F01P 1/00, F16J 15/02, F16J 15/34

(54) **DICHTUNGSANORDNUNG UND FLUIDVENTIL**
SEAL ASSEMBLY AND FLUID VALVE
DISPOSITIF D'ÉTANCHÉITÉ ET SOUPAPE À FLUIDE

(43) Veröffentlichungstag der Anmeldung: 28.10.2020
(73) Patentinhaber: Vitesco Technologies GmbH, 93055 Regensburg (DE)
(72) Erfinder: Rozputniak, Dmytro, 300585 Timisoara (RO); Plaeru, George, 300620 Timisoara (RO); Isaincu, Alexandru, 307041 Dudestii Noi (RO); Popa, Alexandru, 240048 Rimnicu Vilcea (RO)
(74) Vertreter: Vitesco Technologies

(56) Entgegenhaltungen:
- WO-A1-2018/108282
- DE-A1- 3 437 247
- DE-A1-102009 014 047
- DE-A1-102017 216 345
- DE-U1-202017 000 564
- US-A- 4 217 923
- US-A1- 2014 319 395

## Beschreibung

Die vorliegende Erfindung betrifft eine Dichtungsanordnung für ein Fluidventil, ein Fluidventil mit der Dichtungsanordnung, ein Kraftfahrzeug mit der Dichtungsanordnung, insbesondere dem Fluidventil, sowie ein Verfahren zur Abdichtung zwischen einem Ventilgehäuse und einem verstellbaren, insbesondere verdrehbaren, Ventilkörper mittels der Dichtungsanordnung.

Die DE 10 2009 014 047 A1 betrifft ein Regelventil zur Regelung eines Kühlmittelkreislaufs einer Verbrennungskraftmaschine mit einem ersten an einem Ventilgehäuse angeordneten Zuführanschluss für Kühlwasser eines Bypasskreises sowie mindestens einem zweiten Zuführanschluss für Kühlwasser eines Kühlerkreises, die je nach Stellung eines im Ventilgehäuse untergebrachten Ventilgliedes mit einem Abführanschluss verbindbar sind, wobei zur Abdichtung der Kühlmittelströmungswege in axialer Richtung und/oder radialer Richtung wenigstens ein am Ventilglied anliegendes, dynamisch belastbares Dichtelement vorgesehen ist, das zumindest teilweise aus Polytetrafluorethylen besteht oder mit Polytetrafluorethylen beschichtet ist und zur Sicherstellung einer dichtenden Anlage am Ventilglied von der Druckkraft einer Druckfeder beaufschlagt wird.

Die US 2014/319395 A1 betrifft einen Dichtungsträger für ein Kugelventil, der einen Trägerkörper umfasst, der zwischen einer Kugel und einem Abschnitt eines Ventilkörpers angeordnet werden soll, wobei eine Feder sich an einem Umfangsabschnitt des Trägerkörpers befindet, ein Endabschnitt der Feder so konfiguriert ist, dass er gegen den Abschnitt des Ventilkörpers stößt, und die Feder so konfiguriert ist, dass sie eine Druckkraft zwischen dem Abschnitt des Ventilkörpers und der Kugel in einer Richtung parallel zu der Richtung des Fluidflusses durch die Kugelventil-Baugruppe bereitstellt.

Eine Aufgabe einer Ausführung der vorliegenden Erfindung ist es, eine Abdichtung zwischen einem Ventilgehäuse und einem verstellbaren, insbesondere verdrehbaren, Ventilkörper zu verbessern.

Diese Aufgabe wird durch ein Dichtelement mit den Merkmalen des Anspruchs 1 gelöst. Ansprüche 8, 9 bzw. 10 stellen ein Fluidventil mit einer hier beschriebenen Dichtungsanordnung, ein Kraftfahrzeug mit wenigstens einer hier beschriebenen Dichtungsanordnung, insbesondere wenigstens einem hier beschriebenen Fluidventil, bzw. ein Verfahren zur Abdichtung zwischen einem Ventilgehäuse und einem verstellbaren, insbesondere verdrehbaren, Ventilkörper mittels einer hier beschriebenen Dichtungsanordnung unter Schutz. Vorteilhafte Ausführungsformen der Erfindung sind Gegenstand der Unteransprüche.

Erfindungsgemäß weist die Dichtungsanordnung, die zur Abdichtung zwischen einem Ventilgehäuse und einem, in einer Ausführung vollständig oder teilweise in dem Ventilgehäuse, verstellbar( angeordneten, insbesondere verdrehbar( angeordneten, Ventilkörper eines Fluidventils, vorgesehen, insbesondere eingerichtet ist bzw. verwendet wird,
- ein erstes, separat( ausgebildetes Dichtelement, das zur dichtenden Anlage gegen das Ventilgehäuse des Fluidventils vorgesehen, insbesondere eingerichtet ist bzw. verwendet wird,
- ein zweites, separat( ausgebildetes Dichtelement, das zur dichtenden Anlage gegen den Ventilkörper des Fluidventils vorgesehen, insbesondere eingerichtet ist bzw. verwendet wird, sowie
- ein separat( ausgebildetes, elastisch verformbares Zwischenstück auf, welches in einer Axialrichtung zwischen einer dem zweiten Dichtelement zugewandten ersten Wandung des ersten Dichtelements und einer dem ersten Dichtelement zugewandten zweiten Wandung des zweiten Dichtelements angeordnet ist und die beiden Dichtelemente elastisch beabstandet bzw. hierzu vorgesehen, insbesondere eingerichtet ist bzw. verwendet wird,
wobei in wenigstens einem Axialabschnitt des Zwischenstücks, der sich erfindungsgemäß über wenigstens 75% einer axialen (Gesamt)Länge des Zwischenstücks erstreckt, ein axialer Querschnitt des Zwischenstücks eine konvexe erste radiale Mantelfläche und eine gegenüberliegende zweite radiale Mantelfläche aufweist, die konkav, plan oder weniger konvex als diese erste radiale Mantelfläche ist. Die konvexe erste Mantelfläche und/oder die konkave oder weniger konvexe zweite radiale Mantelfläche ist in einer Ausführung (jeweils) gekrümmt, in einer Weiterbildung weist sie einen konstanten (Krümmungs)Radius auf.

Hierdurch wird Erfindungsgemäß neben einer elastischen axialen Kompression zusätzlich eine elastische Biegung des im Querschnitt halbmondartigen Zwischenstücks realisiert.

Dadurch können in einer Ausführung das Zwischenstück einen vorteilhaften Steifigkeitsverlauf bzw. Verlauf einer durch das Zwischenstück ausgeübten Reaktionskraft über bzw. bei einer axialen Annäherung der ersten und zweiten Wand aufeinander zu zur Verfügung gestellt und dadurch insbesondere Toleranzen des Fluidventils wenigstens teilweise (besser) kompensiert werden. Zusätzlich oder alternativ kann hierdurch in einer Ausführung eine Dichtwirkung verbessert werden. Konvex bzw. konkav wird in einer Ausführung wie bei optischen Linsen üblich verstanden.

In einer Ausführung ist bzw. sind das erste Dichtelement und/oder das zweite Dichtelement und/oder das Zwischenstück (jeweils) ringartig, insbesondere ringförmig (ausgebildet).

Zusätzlich oder alternativ ist/sind in einer Ausführung das erste Dichtelement und/oder das zweite Dichtelement und/oder das Zwischenstück (jeweils) bezüglich einer zur Axialrichtung parallelen Symmetrieachse wenigstens abschnittsweise rotationssymmetrisch.

Hierdurch kann in einer Ausführung die Dichtwirkung, Herstellung und/oder Montage verbessert werden.

In einer Ausführung ist die erste radiale Mantelfläche eine radial äußere Mantelfläche, insbesondere also nach radial außen gewölbt, und die zweite radiale Mantelfläche eine radial innere Mantelfläche, die in einer Ausführung ebenfalls nach radial außen gewölbt, plan oder nur schwächer nach radial innen gewölbt ist.

Hierdurch kann das Zwischenstück in einer Ausführung vorteilhaft gezielt bzw. forciert nach radial außen auswölben. Dadurch kann in einer Ausführung das Zwischenstück einen besonders vorteilhaften Steifigkeitsverlauf aufweisen.

In einer alternativen Ausführung ist die erste radiale Mantelfläche eine radial innere Mantelfläche, insbesondere also nach radial innen gewölbt, und die zweite radiale Mantelfläche eine radial äußere Mantelfläche, die in einer Ausführung ebenfalls nach radial innen gewölbt, plan oder nur schwächer nach radial außen gewölbt ist.

Hierdurch kann das Zwischenstück in einer Ausführung vorteilhaft gezielt bzw. forciert nach radial außen auswölben. Dadurch kann in einer Ausführung eine Dichtwirkung verbessert werden.

In einer Ausführung ist das erste Dichtungselement als ein Hart-Dichtelement ausgebildet und/oder weist wenigstens ein Thermoplast, insbesondere PTFE, auf, es kann insbesondere hieraus bestehen, insbesondere urgeformt sein.

Zusätzlich oder alternativ ist in einer Ausführung das zweite Dichtungselement als ein Hart-Dichtelement ausgebildet und/oder weist wenigstens ein Thermoplast, insbesondere PTFE, auf, es kann insbesondere hieraus bestehen, insbesondere urgeformt sein.

Zusätzlich oder alternativ weist das Dichtelement in einer Ausführung wenigstens ein Elastomer, in einer Weiterbildung EPDM, auf, es kann in einer Ausführung hieraus bestehen, insbesondere urgeformt sein.

Hierdurch kann in einer Ausführung jeweils, insbesondere in Kombination wenigstens zweier dieser Merkmale, die Herstellung, Reibung und/oder Dichtwirkung verbessert werden.

In einer Ausführung sind das erste und zweite Dichtungselement in Axialrichtung gegeneinander beweglich, insbesondere aneinander geführt, und/oder, in einer Ausführung formschlüssig, aneinander verliergesichert.

Hierdurch kann in einer Ausführung die Funktion und/oder Montage verbessert werden, insbesondere in Kombination mit dem elastisch verformbaren Zwischenstück.

In einer Ausführung ist das Zwischenstück wenigstens in einem Betriebszustand der Dichtungsanordnung, in einer Weiterbildung (bereits) in einem montierten bzw. Montagezustand, in Axialrichtung elastisch zwischen der bzw. durch die erste(n) und zweite(n) Wandung verspannt.

Hierdurch kann in einer Ausführung die Dichtwirkung verbessert werden.

In einer Ausführung schließt die erste Wandung radial innen und/oder radial außen an einen Axialflansch (des ersten Dichtelements) an. Zusätzlich oder alternativ schließt in einer Ausführung die zweite Wandung radial innen und/oder radial außen an einen Axialflansch (des zweiten Dichtelements) an.

Dadurch kann in einer Ausführung eine Bewegung des Zwischenstücks begrenzt und damit insbesondere dessen elastische Verformung beeinflusst und somit in einer Ausführung die Dichtwirkung und/oder der Steifigkeitsverlauf (weiter) verbessert werden.

In einer Ausführung weist das Zwischenstück eine maximale axiale Länge von wenigstens 1,5 mm, insbesondere wenigstens 2,5 mm, und/oder höchstens 10 mm, insbesondere höchstens 5 mm auf. Zusätzlich oder alternativ weist es in einer Ausführung eine maximale Wandstärke zwischen der ersten und zweiten radialen Mantelfläche von wenigstens 0,35 mm, insbesondere wenigstens 0,5 mm, und/oder höchstens 5 mm, insbesondere höchstens 2 mm auf.

Bei solchen Abmessungen kann die vorliegende Erfindung besonders vorteilhaft wirken.

Eine erfindungsgemäße Dichtungsanordnung kann mit besonderem Vorteil zum Abdichten zwischen einem Ventilgehäuse und einem verstellbaren, insbesondere verdrehbaren, Ventilkörper, insbesondere einem wenigstens teilweise in dem Ventilgehäuse verstellbar, insbesondere verdrehbar, angeordneten Ventilkörper, eines Fluidventils, insbesondere eines Mehrwege- und/oder Kühlwasser-Steuerventils, insbesondere Mehrwege- und/oder Kühlwasser-Regelventils, und/oder für ein bzw. eines Kraftfahrzeug(s) verwendet werden.

Ein Fluidventil ist in einer Ausführung ein Fluidsteuerventil, in einer Weiterbildung ein Fluidregelventil.

Im Weiteren wird die Erfindung unter Bezugnahme auf Figurendarstellungen im Einzelnen erläutert. Aus den Unteransprüchen und der nachfolgenden Beschreibung bevorzugter Ausführungen ergeben sich weitere vorteilhafte Weiterbildungen der Erfindung. Hierzu zeigen, teilweise schematisiert:
- Fig. 1: einen Teil eines Fluidventils eines Kraftfahrzeugs mit einer Dichtungsanordnung nach einer Ausführung der vorliegenden Erfindung in einem Axialschnitt,
- Fig. 2: die Dichtungsanordnung alleine in Explosionsdarstellung,
- Fig. 3: einen Querschnitt eines Zwischenstücks der Dichtungsanordnung, und
- Fig. 4: einen Querschnitt eines Zwischenstücks einer Dichtungsanordnung nach einer weiteren Ausführung der vorliegenden Erfindung.

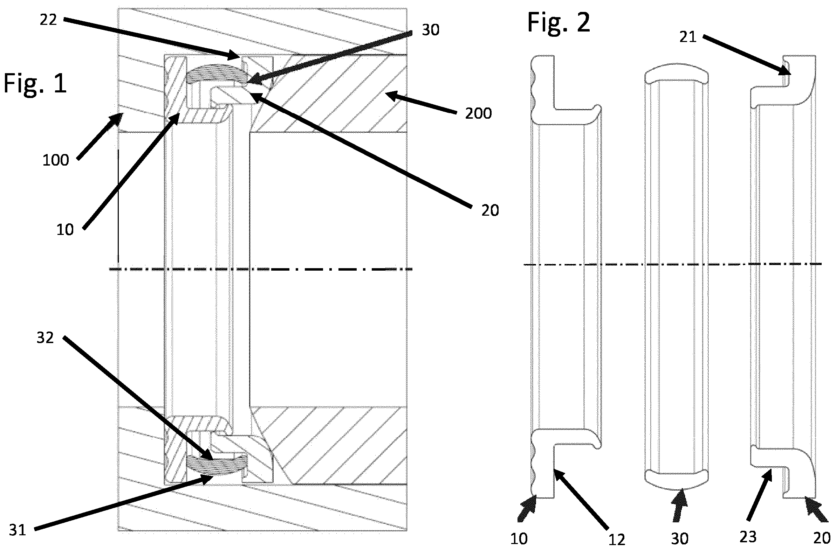

Fig. 1 zeigt einen Teil eines Fluidventils eines Kraftfahrzeugs mit einer Dichtungsanordnung nach einer Ausführung der vorliegenden Erfindung in einem Axialschnitt.

Das Fluidventil weist ein Ventilgehäuse 100 und einen Ventilkörper 200 auf, der um eine in Fig. 1 vertikale Achse verdrehbar in dem Gehäuse 100 angeordnet ist.

Die Dichtungsanordnung weist ein ringartiges erstes Dichtelement 10 zur dichtenden Anlage gegen das Ventilgehäuse 100,
ein ringartiges zweites Dichtelement 20 zur dichtenden Anlage gegen den Ventilkörper 200 sowie ein ringartiges, elastisch verformbares Zwischenstück 30 auf, welches in einer Axialrichtung (horizontal in Fig. 1) zwischen einer dem zweiten Dichtelement 20 zugewandten ersten Wandung 12 des ersten Dichtelements 10 und einer dem ersten Dichtelement 10 zugewandten zweiten Wandung 21 des zweiten Dichtelements 20 verspannt ist und die beiden Dichtelemente 10, 20 elastisch beabstandet.

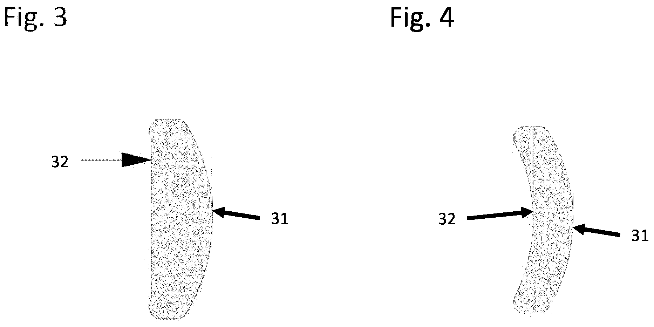

Ein axialer Querschnitt des Zwischenstücks 30 weist eine radial äußere, konvexe erste Mantelfläche 31 und eine gegenüberliegende bzw. radial innere zweite Mantelfläche 32 auf, die plan ist (vgl. insbesondere Fig. 3).

In einer in Fig. 4 gezeigten, im Übrigen gleichen, weiteren Ausführung der vorliegenden Erfindung ist diese radial innere zweite Mantelfläche 32 konkav.

Dadurch wölbt das Zwischenstück 30 bei axialer Annäherung von erster und zweiter Wand 12, 21 gezielt bzw. forciert nach radial außen aus. Hierdurch wird zusätzlich zur elastischen Kompression in Axialrichtung eine zusätzliche Federungsfunktionalität realisiert und dadurch der Steifigkeitsverlauf des Zwischenstücks 30 bzw. der Dichtungsanordnung verbessert.

Das erste und zweite Dichtungselement 10, 20 sind in Axialrichtung gegeneinander beweglich und formschlüssig aneinander geführt und verliergesichert, wie in Fig. 1 erkennbar.

Die zweite Wandung 21 schließt radial innen und außen jeweils an einen Axialflansch 22 bzw. 23 an, der eine Bewegung bzw. Deformation des Zwischenstücks 30 vorteilhaft beeinflusst.

Gleiche oder gleichwirkende Merkmale sind über alle Figuren hinweg mit denselben Bezugszeichen gekennzeichnet.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

## Patentansprüche

1. Dichtungsanordnung für ein Fluidventil, die aufweist:
ein erstes, separates Dichtelement (10) zur dichtenden Anlage gegen ein Ventilgehäuse (100) des Fluidventils,
ein zweites, separates Dichtelement (20) zur dichtenden Anlage gegen einen verstellbaren, insbesondere verdrehbaren, Ventilkörper (200) des Fluidventils, sowie
ein separates, elastisch verformbares Zwischenstück (30), welches in einer Axialrichtung zwischen einer dem zweiten Dichtelement (20) zugewandten ersten Wandung (12) des ersten Dichtelements (10) und einer dem ersten Dichtelement (10) zugewandten zweiten Wandung (21) des zweiten Dichtelements (20) zur elastischen Beabstandung der beiden Dichtelemente (10, 20) angeordnet ist,
wobei in wenigstens einem Axialabschnitt des Zwischenstücks (30), der sich über wenigstens 75% einer axialen Länge des Zwischenstücks erstreckt, ein axialer Querschnitt des Zwischenstücks (30) eine erste radiale Mantelfläche (31) und eine gegenüberliegende zweite radiale Mantelfläche (32) aufweist, wobei diese erste radiale Mantelfläche (31) konvex und diese zweite radiale Mantelfläche (32) konkav, plan oder weniger konvex als die erste radiale Mantelfläche ist,
**dadurch gekennzeichnet, dass** das Zwischenstück (30) im Querschnitt halbmondartig ist.

2. Dichtungsanordnung nach Anspruch 1, wobei das erste und/oder zweite Dichtelement (10, 20) und/oder das Zwischenstück (30) ringartig und/oder bezüglich einer zur Axialrichtung parallelen Symmetrieachse wenigstens abschnittsweise rotationssymmetrisch ist.

3. Dichtungsanordnung nach einem der vorhergehenden Ansprüche, wobei die erste radiale Mantelfläche (31) eine radial äußere Mantelfläche und die zweite radiale Mantelfläche (32) eine radial innere Mantelfläche ist oder wobei die erste radiale Mantelfläche (31) eine radial innere Mantelfläche und die zweite radiale Mantelfläche (32) eine radial äußere Mantelfläche ist.

4. Dichtungsanordnung nach einem der vorhergehenden Ansprüche, wobei das erste und/oder zweite Dichtungselement (10, 20) als ein Hart-Dichtelement ausgebildet ist und/oder wenigstens ein Thermoplast, insbesondere PTFE, aufweist und/oder das Zwischenstück (30) wenigstens ein Elastomer, insbesondere EPDM, aufweist.

5. Dichtungsanordnung nach einem der vorhergehenden Ansprüche, wobei das erste und zweite Dichtungselement (10, 20) in Axialrichtung gegeneinander beweglich und/oder, insbesondere formschlüssig, aneinander verliergesichert sind.

6. Dichtungsanordnung nach einem der vorhergehenden Ansprüche, wobei das Zwischenstück (30) zwischen der ersten und zweiten Wandung (12, 21) elastisch verspannt ist.

7. Dichtungsanordnung nach einem der vorhergehenden Ansprüche, wobei wenigstens eine von der ersten und zweiten Wandung (12, 21) radial innen und/oder außen an einen Axialflansch (22, 23) anschließt.

8. Fluidventil, insbesondere Mehrwege- und/oder Kühlwasser-Steuer- oder -Regelventil und/oder für ein Kraftfahrzeug, mit wenigstens einer Dichtungsanordnung nach einem der vorhergehenden Ansprüche zur Abdichtung zwischen einem Ventilgehäuse (100) und einem verstellbaren, insbesondere verdrehbaren, Ventilkörper (200).

9. Kraftfahrzeug mit wenigstens einer Dichtungsanordnung, insbesondere wenigstens einem Fluidventil, nach einem der vorhergehenden Ansprüche.

10. Verfahren zur Abdichtung zwischen einem Ventilgehäuse (100) und einem verstellbaren, insbesondere verdrehbaren, Ventilkörper (200) mittels einer Dichtungsanordnung nach einem der vorhergehenden Ansprüche, wobei das Zwischenstück (30) zwischen der ersten und zweiten Wandung (12, 21) angeordnet, insbesondere elastisch verspannt, wird.

## Claims

1. Seal arrangement for a fluid valve, said seal arrangement having:
a first, separate sealing element (10) for bearing in a sealing manner against a valve housing (100) of the fluid valve,
a second, separate sealing element (20) for bearing in a sealing manner against an adjustable, in particular rotatable, valve body (200) of the fluid valve, and
a separate, elastically deformable intermediate piece (30) which is arranged in an axial direction between a first wall (12), facing the second sealing element (20), of the first sealing element (10) and
a second wall (21), facing the first sealing element (10), of the second sealing element (20) in order to elastically space apart the two sealing elements (10, 20),
wherein, in at least one axial portion of the intermediate piece (30), said axial portion extending along at least 75% of an axial length of the intermediate piece, an axial cross section of the intermediate piece (30) has a first radial lateral surface (31) and an opposite second radial lateral surface (32),
wherein this first radial lateral surface (31) is convex and this second radial lateral surface (32) is concave, planar or less convex than the first radial lateral surface,
**characterized in that**
the intermediate piece (30) is crescent-shaped in cross section.

2. Seal arrangement according to Claim 1, wherein the first and/or second sealing element (10, 20) and/or the intermediate piece (30) is/are at least partially rotationally symmetric in a ring-like manner and/or with regard to an axis of symmetry parallel to the axial direction.

3. Seal arrangement according to either of the preceding claims, wherein the first radial lateral surface (31) is a radially outer lateral surface and the second radial lateral surface (32) is a radially inner lateral surface, or wherein the first radial lateral surface (31) is a radially inner lateral surface and the second radial lateral surface (32) is a radially outer lateral surface.

4. Seal arrangement according to one of the preceding claims, wherein the first and/or second seal element (10, 20) is/are in the form of a hard sealing element and/or exhibit(s) at least one thermoplastic, in particular PTFE, and/or the intermediate piece (30) exhibits at least one elastomer, in particular EPDM.

5. Seal arrangement according to one of the preceding claims, wherein the first and second seal elements (10, 20) are movable with respect to one another in an axial direction and/or are secured captively together, in particular in a form-fitting manner.

6. Seal arrangement according to one of the preceding claims, wherein the intermediate piece (30) is elastically braced between the first and second walls (12, 21).

7. Seal arrangement according to one of the preceding claims, wherein at least one of the first and second walls (12, 21) adjoins an axial flange (22, 23) radially on the inside and/or outside.

8. Fluid valve, in particular a multi-way and/or cooling-water control or regulating valve and/or for a vehicle, having at least one seal arrangement according to one of the preceding claims for providing sealing between a valve housing (100) and an adjustable, in particular rotatable, valve body (200) .

9. Vehicle having at least one seal arrangement, in particular at least one fluid valve, according to one of the preceding claims.

10. Method for providing sealing between a valve housing (100) and an adjustable, in particular rotatable, valve body (200) by means of a seal arrangement according to one of the preceding claims, wherein the intermediate piece (30) is arranged, in particular elastically braced, between the first and second walls (12, 21).

## Revendications

1. Agencement d'étanchéité pour une vanne à fluide, qui comprend :
un premier élément d'étanchéité (10) séparé destiné à une application étanche contre un boîtier de vanne (100) de la vanne à fluide,
un deuxième élément d'étanchéité (20) séparé destiné à une application étanche contre un corps de vanne (200) réglable, en particulier rotatif, de la vanne à fluide, ainsi que
une pièce intermédiaire (30) séparée, élastiquement déformable, qui est agencée dans une direction axiale entre une première paroi (12) du premier élément d'étanchéité (10), tournée vers le deuxième élément d'étanchéité (20), et une deuxième paroi (21) du deuxième élément d'étanchéité (20), tournée vers le premier élément d'étanchéité (10), pour un écartement élastique des deux éléments d'étanchéité (10, 20),
une partie axiale de la pièce intermédiaire (30) présentant, dans au moins une partie axiale de la pièce intermédiaire (30), qui s'étend sur au moins 75 % d'une longueur axiale de la pièce intermédiaire, une première surface d'enveloppe radiale (31) et une deuxième surface d'enveloppe radiale (32) opposée,
ladite première surface d'enveloppe radiale (31) étant convexe et ladite deuxième surface d'enveloppe radiale (32) étant concave, plane ou moins convexe que ladite première surface d'enveloppe radiale,
**caractérisé en ce que** la pièce intermédiaire (30) a une section transversale en forme de demi-lune.

2. Agencement d'étanchéité selon la revendication 1, dans lequel le premier et/ou le deuxième élément d'étanchéité (10, 20) et/ou la pièce intermédiaire (30) est/sont annulaire(s) et/ou présente(nt) une symétrie de rotation au moins par endroits par rapport à un axe de symétrie parallèle à la direction axiale.

3. Agencement d'étanchéité selon l'une des revendications précédentes, dans lequel la première surface d'enveloppe radiale (31) est une surface d'enveloppe radialement extérieure et la deuxième surface d'enveloppe radiale (32) est une surface d'enveloppe radialement intérieure ou dans lequel la première surface d'enveloppe radiale (31) est une surface d'enveloppe radialement intérieure et la deuxième surface d'enveloppe radiale (32) est une surface d'enveloppe radialement extérieure.

4. Agencement d'étanchéité selon l'une des revendications précédentes, dans lequel le premier et/ou le deuxième élément d'étanchéité (10, 20) est/sont conçu(s) sous la forme d'un élément d'étanchéité dur et/ou comprend/comprennent au moins un thermoplastique, en particulier du PTFE, et/ou la pièce intermédiaire (30) comprend au moins un élastomère, en particulier de l'EPDM.

5. Agencement d'étanchéité selon l'une des revendications précédentes, dans lequel le premier et le deuxième élément d'étanchéité (10, 20) sont mobiles l'un par rapport à l'autre dans la direction axiale et/ou sont bloqués l'un contre l'autre, en particulier par complémentarité de forme.

6. Agencement d'étanchéité selon l'une des revendications précédentes, dans lequel la pièce intermédiaire (30) est serrée élastiquement entre la première et la deuxième paroi (12, 21).

7. Agencement d'étanchéité selon l'une des revendications précédentes, dans lequel au moins l'une des première et deuxième parois (12, 21) se raccorde radialement à l'intérieur et/ou à l'extérieur à une bride axiale (22, 23).

8. Vanne à fluide, notamment vanne de régulation multivoies et/ou de commande ou de régulation d'eau de refroidissement et/ou pour un véhicule automobile, comportant au moins un agencement d'étanchéité selon l'une des revendications précédentes pour assurer l'étanchéité entre un boîtier de vanne (100) et un corps de vanne (200) réglable, en particulier rotatif.

9. Véhicule automobile comportant au moins un agencement d'étanchéité, notamment au moins une vanne à fluide, selon l'une des revendications précédentes.

10. Procédé de fourniture d'étanchéité entre un boîtier de vanne (100) et un corps de vanne (200) réglable, en particulier rotatif, au moyen d'un agencement d'étanchéité selon l'une des revendications précédentes, la pièce intermédiaire (30) étant disposée, notamment serrée élastiquement, entre la première et la deuxième paroi (12, 21).
